# EUROPEAN PATENT SPECIFICATION

(11) **EP 3 199 779 B1**
(45) Date of publication and mention of the grant of the patent: **20.03.2019**
(21) Application number: 17154075.0
(22) Date of filing: 31.01.2017
(51) Int. Cl.: F02C 6/08, F02C 7/12, F02C 7/18, F02C 9/22

(54) **COOLING AIR FOR VARIABLE GEOMETRY TURBINE**
KÜHLLUFT FÜR TURBINE MIT VERÄNDERLICHEM QUERSCHNITT
AIR DE REFROIDISSEMENT POUR TURBINE À GÉOMÉTRIE VARIABLE

(30) Priority: 01.02.2016 US 201615011762
(43) Date of publication of application: 02.08.2017
(73) Proprietor: United Technologies Corporation, Farmington, CT 06032 (US)
(72) Inventor: HANRAHAN, Paul R., Farmington, CT 06032 (US); SUCIU, Gabriel L., Glastonbury, CT 06033 (US)
(74) Representative: Dehns

(56) References cited:
- EP-A1- 3 056 716
- US-A- 5 724 806
- US-A1- 2009 196 736
- US-A1- 2013 294 950

## Description

### BACKGROUND

This application relates to improvements in providing cooling air from a compressor section to a turbine section in a gas turbine engine.

Gas turbine engines are known and typically include a fan delivering air into a bypass duct as propulsion air. Further, the fan delivers air into a compressor section where it is compressed. The compressed air passes into a combustion section where it is mixed with fuel and ignited. Products of this combustion pass downstream over turbine rotors driving them to rotate.

It is known to provide cooling air from the compressor to the turbine section to lower the operating temperatures in the turbine section and improve overall engine operation. Typically, air from the high compressor discharge has been tapped, passed through a heat exchanger, which may sit in the bypass duct, and then delivered into the turbine section. The air from the downstream most end of the compressor section is at elevated temperatures.

One feature which has been incorporated into gas turbine engines is a variable area turbine. In such systems, a variable vane is positioned upstream of a turbine rotor. An actuator rotates the position of the vane to control the volume of products of combustion reaching the turbine rotor. Such systems are known, and provide a gas turbine engine design with additional flexibility to achieve desired flow conditions.

As can be appreciated, turbine sections are subjected to very extreme heat. As such, it is known to provide cooling air to a turbine section. Typically, the cooling air has been supplied from a compressor section, as mentioned above. However, when the variable vane upstream of the turbine is actuated, the pressures across the turbine section change. If the variable vane is moved to a more closed position, then an expansion ratio across the turbine section will increase, and pressures at downstream locations will decrease. The pressures in the turbine section tend to resist the entry of the cooling air, and thus by lowering the pressures at the turbine section, that resistance is lowered and additional cooling air flow to the turbine section may be experienced. When this occurs, undesirably high volumes of cooling air may enter the turbine section. This is undesirable for any number of reasons.

EP 3056716 A1, which is prior art under Art. 54(3) EPC, discloses intercooled cooling air.

US 2009/196736 A1 disclose a gas turbine engine as recited in the preamble of claim 1.

### SUMMARY

In a first aspect, the invention provides a gas turbine engine as recited in claim 1.

In another embodiment according to the above, the cooling air compressor is a positive displacement pump.

In another embodiment according to any of the previous embodiments, the cooling air compressor is a vane pump.

In another embodiment according to any of the previous embodiments, the tapped air is tapped from the main compressor section at a location upstream of a most downstream portion in the main compressor section.

In another embodiment according to any of the previous embodiments, the turbine section drives a bull gear. The bull gear drives an impeller of the cooling air compressor.

In another embodiment according to the previous embodiment, the bull gear also drives an accessory gearbox.

In another embodiment according to any of the previous embodiments, when the variable vane is moved towards a closed position, an expansion ratio across the turbine section increases such that a pressure at a downstream location decreases.

In another embodiment according to the previous embodiment, when the fixed flow compressor provides an increased flow volume, a pressure of the flow downstream of the fixed flow compressor decreases.

In another embodiment, according to any of the above, the turbine section has a high pressure turbine. A tap line, after tapping the air from the main compressor section, passes the tapped air through a heat exchanger. The cooling air compressor compresses air downstream of the heat exchanger.

In another embodiment according to any of the previous embodiments, air temperatures at a downstream-most location of the high pressure compressor are greater than or equal to 1350°F (732°C).

These and other features can be best understood from the following specification and drawings, the following of which is a brief description.

### BRIEF DESCRIPTION OF THE DRAWINGS

Figure 1 schematically shows an embodiment of a gas turbine engine.
Figure 2 shows a prior art engine.
Figure 3 shows one example engine.
Figure 4 is a graph illustrating increasing temperatures of a tapped air against the work required.
Figure 5 shows a detail of an example of an engine.
Figure 6 shows a further detail of the example engine of Figure 5.
Figure 7 shows a first embodiment.

### DETAILED DESCRIPTION

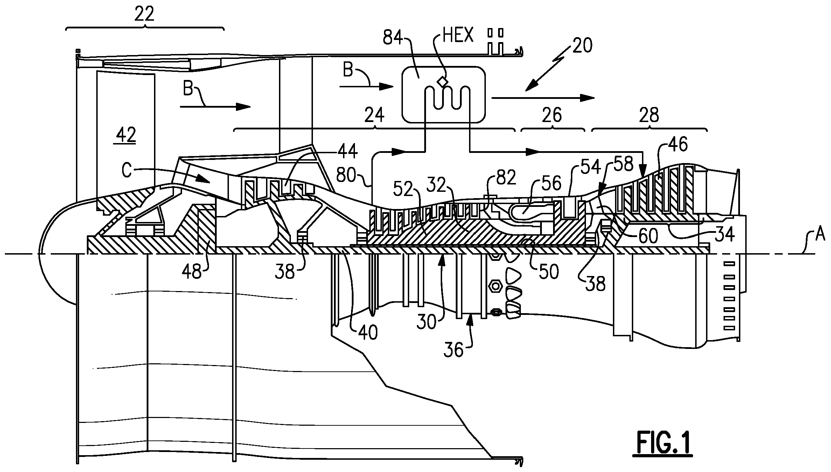

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft. (10,668 metres), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5} (where °R = K x 9/5). The "Low corrected fan tip speed", as disclosed herein according to one non-limiting embodiment, is less than about 1150 ft/second (351 metres/second).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engines designs are seeking to increase overall efficiency by generating higher overall pressure ratios. By achieving higher overall pressure ratios, increased levels of performance and efficiency may be achieved. However, challenges are raised in that the parts and components associated with a high pressure turbine require additional cooling air as the overall pressure ratio increases.

The example engine 20 utilizes air bleed 80 from an upstream portion of the compressor section 24 for use in cooling portions of the turbine section 28. The air bleed is from a location upstream of the discharge 82 of the compressor section 24. The bleed air passes through a heat exchanger 84 to further cool the cooling air provided to the turbine section 28. The air passing through heat exchanger 84 is cooled by the bypass air B. That is, heat exchanger 84 is positioned in the path of bypass air B.

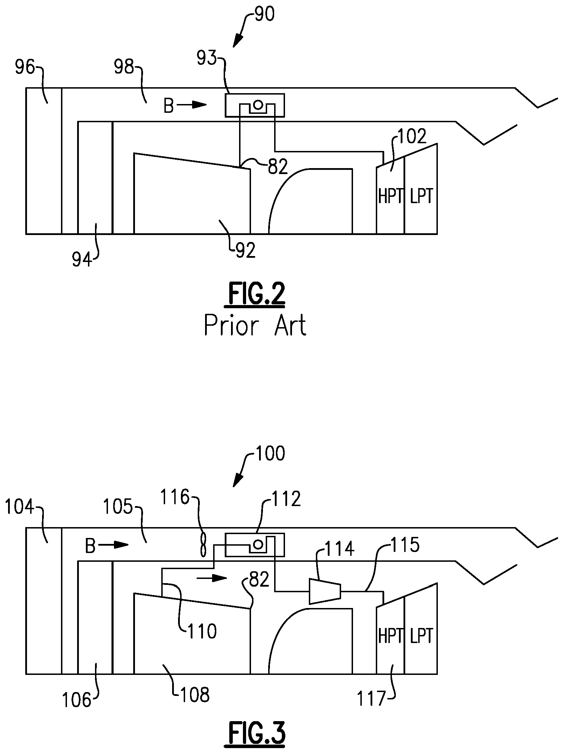

A prior art approach to providing cooling air is illustrated in Figure 2. An engine 90 incorporates a high pressure compressor 92 downstream of the low pressure compressor 94. As known, a fan 96 delivers air into a bypass duct 98 and into the low pressure compressor 94. A downstream most point, or discharge 82 of the high pressure compressor 92 provides bleed air into a heat exchanger 93. The heat exchanger is in the path of the bypass air in bypass duct 98, and is cooled. This high pressure high temperature air from location 82 is delivered into a high pressure turbine 102.

The downstream most point 82 of the high pressure compressor 82 is known as station 3. The temperature T3 and pressure P3 are both very high.

In future engines, T3 levels are expected to approach greater than or equal to 1350°F (732°C). Current heat exchanger technology is becoming a limiting factor as they are made of materials, manufacturing, and design capability which have difficulty receiving such high temperature and pressure levels.

Figure 3 shows an engine 100 within the scope of this invention. A fan 104 may deliver air B into a bypass duct 105 and into a low pressure compressor 106. High pressure compressor 108 is positioned downstream of the low pressure compressor 106. A bleed 110 taps air from a location upstream of the downstream most end 82 of the high pressure compressor 108. This air is at temperatures and pressures which are much lower than T3/P3. The air tapped at 110 passes through a heat exchanger 112 which sits in the bypass duct 105 receiving air B. Further, the air from the heat exchanger 112 passes through a compressor 114, and then into a conduit 115 leading to a high pressure turbine 117. This structure is all shown schematically.

Since the air tapped at point 110 is at much lower pressures and temperatures than the Figure 2 prior art, currently available heat exchanger materials and technology may be utilized. This air is then compressed by compressor 114 to a higher pressure level such that it will be able to flow into the high pressure turbine 117.

An auxiliary fan 116 may be positioned upstream of the heat exchanger 112 as illustrated. The main fan 104 may not provide sufficient pressure to drive sufficient air across the heat exchanger 112. The auxiliary fan will ensure there is adequate air flow in the circumferential location of the heat exchanger 112.

In one embodiment, the auxiliary fan may be variable speed, with the speed of the fan varied to control the temperature of the air downstream of the heat exchanger 112. As an example, the speed of the auxiliary fan may be varied based upon the operating power of the overall engine.

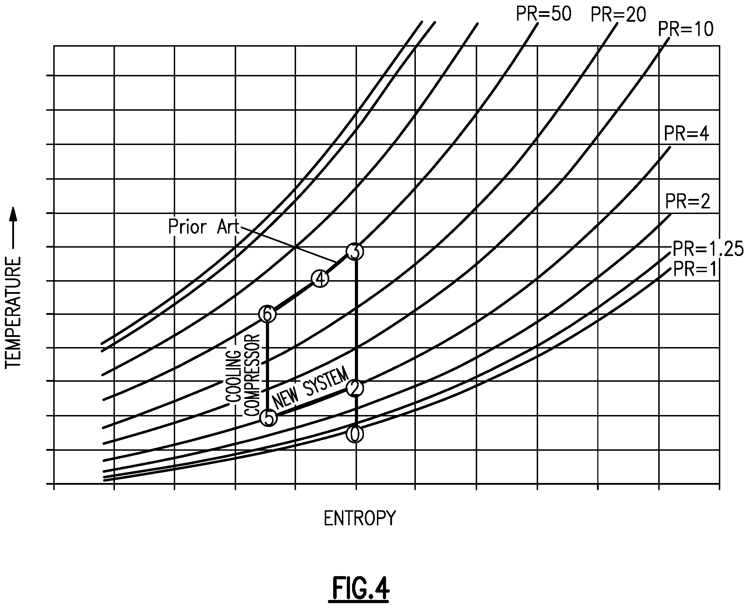

Referring to Figure 4, a temperature/entropy diagram illustrates that a lower level of energy is spent to compress air of a lower temperature to the desired P3 pressure level. Cooler air requires less work to compress when compared to warmer air. Accordingly, the work required to raise the pressure of the air drawn from an early stage of the compressor section is less than if the air were compressed to the desired pressure within the compressor section. Therefore, high pressure air at P3 levels or higher can be obtained at significantly lower temperatures than T3. As shown in Figure 4, to reach a particular pressure ratio, 50 for example, the prior system would move from point 2 to point 3, with a dramatic increase in temperature. However, the disclosed or new system moves from point 2 to point 5 through the heat exchanger, and the cooling compressor then compresses the air up to point 6. As can be appreciated, point 6 is at a much lower temperature.

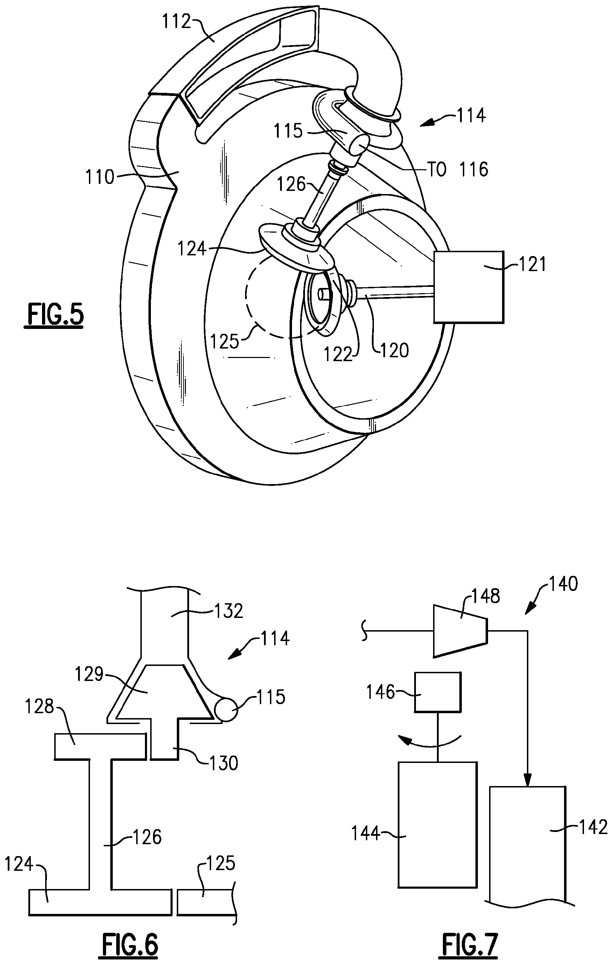

Figure 5 shows a detail of compressor 114 having an outlet into conduit 115. A primary tower shaft 120 drives an accessory gearbox 121. The shaft 126 drives a compressor rotor within the compressor 114. The shafts 120 and 126 may be driven by a bull gear 125 driven by a turbine rotor, and in one example, with a high pressure compressor rotor.

Figure 6 shows an example wherein a gear 128 is driven by the shaft 126 to, in turn, drive a gear 130 which drives a compressor impeller 129. An input 132 to the compressor impeller 129 supplies the air from the tap 110. The air is compressed and delivered into the outlet conduit 115.

By providing a gear ratio multiplier between the compressor impeller 129 and the high spool bull gear 125, the compressor impeller may be driven to operate an optimum speed. As an example, the gear ratio increase may be in a range of 5:1 - 8:1, and in one embodiment, 6:1.

Figure 7 shows turbine section 140 incorporated into an engine as disclosed above. A first stage turbine blade 142 is positioned downstream of a variable vane 144. Vane 144 is shown schematically controlled by an actuator 146 which is operable to change its angle of incidence, and thus control the flow of products of combustion reaching the turbine blade 142.

A variable turbine vane is known to change the flow of the engine core such that it can be operated at a higher pressure ratio and lower flow to reduce fuel consumption, or a lower pressure ratio and higher flow to reduce the temperatures within the engine. The latter is beneficial for high power in hot environments such as takeoff or supersonic flight, while the former is beneficial for partial power and in cooler environments, such as subsonic cruise at altitude.

As disclosed above, the reasons for changing the angle of incidence are known, and raise some challenges. Here, a cooling compressor 148 is positioned on the cooling air flow for cooling air reaching the turbine blade 142, or reaching more downstream areas within the turbine section. Note the location of the supplied cooling air is schematically shown. The cooling compressor 148 is a fixed flow pump or compressor. Thus, the volume of air it moves is limited. The cooling compressor is part of the system disclosed above. Should the challenge mentioned above occur, such that the pressure is seen in the turbine section drop, the volume of cooling air flow delivered to the turbine section should not increase.

In the prior art, the cooling air was delivered from the compressor section, not unlike the prior art as disclosed above in Figure 2. However, by providing a fixed flow fluid moving device (pump or compressor), the above mentioned challenge will not occur. In a fixed flow fluid moving device, as the volume delivered increases the pressure decreases. Thus, the pressure at the turbine section, even though it may be lower, will resist the lower pressure flow from the fixed flow fluid moving device 148.

In embodiments, the fixed flow cooling compressor may be a positive displacement pump/compressor, or a vane pump/compressor that may be operated near choked conditions such that reducing back pressure does not result in substantially more flow.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (100) comprising:
a main compressor section (24);
a turbine section (28) having a variable vane (144) positioned upstream of a rotor blade (142), wherein said variable vane (144) is provided with an actuator (146) operable to control an orientation of said variable vane (144); and
a tap line (110) tapping air from said main compressor section (24), and passing said tapped air through a cooling air compressor (148),
**characterised in that**:
said cooling air compressor (148) is a fixed flow compressor, and air downstream of said cooling air compressor (148) is delivered into said turbine section (28).

2. The gas turbine engine (100) as set forth in claim 1, wherein said tapped air is tapped from the main compressor section (24) at a location upstream of a most downstream portion in said main compressor section (24).

3. The gas turbine engine (100) as set forth in claim 1 or 2, wherein the turbine section (28) has a high pressure turbine (54; 117);
the tap line (110), after tapping the air from said main compressor section (24), passes said tapped air through a heat exchanger (84; 112); and
said cooling air compressor (148) compresses air downstream of said heat exchanger (84; 112).

4. The gas turbine engine (100) as set forth in any preceding claim, wherein said cooling air compressor (148) is a positive displacement pump.

5. The gas turbine engine (100) as set forth in any of claims 1 to 3, wherein said cooling air compressor (148) is a vane pump.

6. The gas turbine engine (100) as set forth in any preceding claim, wherein said turbine section (28) drives a bull gear (125), and said bull gear (125) drives an impeller (129) of said cooling air compressor (148).

7. The gas turbine engine (100) as set forth in claim 6, wherein said bull gear (125) also drives an accessory gearbox (121).

8. The gas turbine engine (100) as set forth in any preceding claim, wherein, when said variable vane (144) is moved towards a closed position, an expansion ratio across the turbine section (28) increases such that a pressure at a downstream location decreases.

9. The gas turbine engine (100) as set forth in claim 8, wherein, when said fixed flow compressor (148) provides an increased flow volume, a pressure of the flow downstream of said fixed flow compressor (148) decreases.

10. The gas turbine engine (100) as set forth in any preceding claim, wherein air temperatures at a downstream-most location of said main compressor section (24) are greater than or equal to 1350°F (732°C).

## Patentansprüche

1. Gasturbinentriebwerk (100), umfassend:
einen Hauptverdichterabschnitt (24);
einen Turbinenabschnitt (28), der eine verstellbare Leitschaufel (144) aufweist, die einer Rotorschaufel (142) vorgeschaltet angeordnet ist, wobei die verstellbare Leitschaufel (144) mit einem Aktuator (146) versehen ist, der betätigt werden kann, um eine Orientierung der verstellbaren Leitschaufel (144) zu steuern, und
eine Zapfleitung (110), die Luft vom Hauptverdichterabschnitt (24) abzapft und die abgezapfte Luft durch einen Kühlluftverdichter (148) leitet,
**dadurch gekennzeichnet, dass**:
der Kühlluftverdichter (148) ein Verdichter mit festem Durchsatz ist und die Luft nach dem Kühlluftverdichter (148) in den Turbinenabschnitt (28) geliefert wird.

2. Gasturbinentriebwerk (100) nach Anspruch 1, wobei die gezapfte Luft vom Hauptverdichterabschnitt (24) an einer Stelle abgezapft wird, die einem am meisten nachgeschalteten Abschnitt in diesem Hauptverdichterabschnitt (24) vorgelagert ist.

3. Gasturbinentriebwerk (100) nach Anspruch 1 oder 2, wobei der Turbinenabschnitt (28) eine Hochdruckturbine (54; 117) aufweist;
die Zapfleitung (110) nach dem Abzapfen der Luft von dem Hauptverdichterabschnitt (24) die abgezapfte Luft durch einen Wärmetauscher (84; 112) leitet; und
der Kühlluftverdichter (148) Luft nach dem Wärmetauscher (84; 112) verdichtet.

4. Gasturbinentriebwerk (100) nach einem der vorstehenden Ansprüche, wobei der Kühlluftverdichter (148) eine Verdrängerpumpe ist.

5. Gasturbinentriebwerk (100) nach einem der Ansprüche 1 bis 3, wobei der Kühlluftverdichter (148) eine Flügelpumpe ist.

6. Gasturbinentriebwerk (100) nach einem der vorstehenden Ansprüche, wobei der Turbinenanschnitt (28) einen Hauptzahnkranz (125) antreibt, und der Hauptzahnkranz (125) einen Läufer (129) des Kühlluftverdichters (148) antreibt.

7. Gasturbinentriebwerk (100) nach Anspruch 6, wobei der Hauptzahnkranz (125) auch ein Hilfsgerätegetriebe (121) antreibt.

8. Gasturbinentriebwerk (100) nach einem der vorstehenden Ansprüche, wobei, wenn die verstellbare Leitschaufel (144) zu einer geschlossenen Position bewegt wird, ein Expansionsverhältnis über dem Turbinenabschnitt (28) zunimmt, so dass ein Druck an einer nachgeschalteten Stelle abnimmt.

9. Gasturbinentriebwerk (100) nach Anspruch 8, wobei, wenn der Verdichter mit festem Durchsatz (148) eine erhöhte Durchflussmenge bereitstellt, ein Druck des Stroms nach dem Verdichter mit festem Durchsatz (148) abnimmt.

10. Gasturbinentriebwerk (100) nach einem der vorstehenden Ansprüche, wobei die Lufttemperaturen an einem am meisten nachgeschalteten Abschnitt des Hauptverdichterabschnitts (24) größer oder gleich 1.350 °F (732 °C) sind.

## Revendications

1. Moteur à turbine à gaz (100) comprenant :
une section de compresseur principal (24) ;
une section de turbine (28) ayant une aube variable (144) positionnée en amont d'une aube de rotor (142), dans lequel ladite aube variable (144) est dotée d'un actionneur (146) capable de fonctionner de manière à commander une orientation de ladite aube variable (144) ; et
une ligne de soutirage (110) soutirant de l'air de ladite section de compresseur principal (24), et acheminant ledit air soutiré à travers un compresseur d'air de refroidissement (148),
**caractérisé en ce que** :
ledit compresseur d'air de refroidissement (148) est un compresseur à débit fixe, et l'air en aval dudit compresseur d'air de refroidissement (148) est distribué dans ladite section de turbine (28).

2. Moteur à turbine à gaz (100) selon la revendication 1, dans lequel ledit air soutiré est soutiré à partir de la section de compresseur principal (24) au niveau d'un emplacement en amont d'une partie la plus en aval dans ladite section de compresseur principal (24).

3. Moteur à turbine à gaz (100) selon la revendication 1 ou 2, dans lequel la section de turbine (28) a une turbine haute pression (54 ; 117) ;
la ligne de soutirage (110), après avoir soutiré l'air à partir de ladite section de compresseur principal (24), achemine ledit air soutiré à travers un échangeur de chaleur (84 ; 112) ; et
ledit compresseur d'air de refroidissement (148) comprime de l'air en aval dudit échangeur de chaleur (84 ; 112).

4. Moteur à turbine à gaz (100) selon une quelconque revendication précédente, dans lequel ledit compresseur d'air de refroidissement (148) est une pompe volumétrique.

5. Moteur à turbine à gaz (100) selon l'une quelconque des revendications 1 à 3, dans lequel ledit compresseur d'air de refroidissement (148) est une pompe à palettes.

6. Moteur à turbine à gaz (100) selon une quelconque revendication précédente, dans lequel ladite section de turbine (28) entraîne une couronne de commande (125), et ladite couronne de commande (125) entraîne une roue à aubes (129) dudit compresseur d'air de refroidissement (148).

7. Moteur à turbine à gaz (100) selon la revendication 6, dans lequel ladite couronne de commande (125) entraîne également un relais d'accessoires (121).

8. Moteur à turbine à gaz (100) selon une quelconque revendication précédente, dans lequel, lorsque ladite aube variable (144) est déplacée vers une position fermée, un rapport de dilatation à travers la section de turbine (28) augmente de sorte qu'une pression dans un emplacement aval diminue.

9. Moteur à turbine à gaz (100) selon la revendication 8, dans lequel, lorsque ledit compresseur à débit fixe (148) fournit un volume de débit accru, une pression du débit en aval dudit compresseur à débit fixe (148) diminue.

10. Moteur à turbine à gaz (100) selon une quelconque revendication précédente, dans lequel les températures de l'air au niveau d'un emplacement le plus en aval de la dite section de compresseur principal (24) sont supérieures ou égales à 1 350 °F (732 °C).
